(19) Europäisches Patentamt
European Patent Office
Office européen des brevets

(11) EP 0 551 937 B1

(12) FASCICULE DE BREVET EUROPEEN

(45) Date de publication et mention de la délivrance du brevet:
**13.11.1996 Bulletin 1996/46**

(51) Int Cl.6: **H04L 1/20**

(21) Numéro de dépôt: **93200016.9**

(22) Date de dépôt: **06.01.1993**

# (54) Dispositif de mesure de qualité de transmission dans une ligne à deux fils avec annulation d'écho

Anordnung zur Messung der Qualität einer Übertragung in einer Zweidrahtleitung mit Echolöschung

Device for measuring transmission quality in a two-wire line with echo cancellation

(84) Etats contractants désignés:
**DE ES GB IT**

(30) Priorité: **14.01.1992 FR 9200313**

(43) Date de publication de la demande:
**21.07.1993 Bulletin 1993/29**

(73) Titulaire: **FRANCE TELECOM**
**F-75015 Paris (FR)**

(72) Inventeurs:
- **Perrot, Jean-Claude**
  **F-22420 Lanvellec (FR)**
- **Bencivengo, Alain**
  **F-22300 Lannion (FR)**
- **Oger, Patrick**
  **F-22700 Perros-Guirec (FR)**

(74) Mandataire: **Martinet & Lapoux**
**BP 405**
**78055 St. Quentin en Yvelines Cédex (FR)**

(56) Documents cités:
**FR-A- 2 399 162** **GB-A- 2 190 566**
**US-A- 4 891 813**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 551 937 B1

Printed by Jouve, 75001 PARIS (FR)

## Description

La présente invention concerne, de manière générale, des mesures de qualité en transmission dans une ligne à deux fils avec annulation d'écho.

Afin de terminer la numérisation du réseau téléphonique et de permettre son évolution vers un Réseau Numérique à Intégration de Services (RNIS), une dernière étape consistait en la numérisation de la partie du réseau constituée par des installations d'abonné et des moyens de transmission reliant celles-ci à des autocommutateurs de rattachement respectifs. Cette partie du réseau est communément dénommée réseau local ou réseau de distribution. Concernant les moyens de transmission utilisés en distribution, une solution naturelle était offerte pour cette numérisation : cette solution consistait à réutiliser le parc des paires de fils métalliques existant et l'exploiter en numérique. Une utilisation en numérique des paires symétriques du réseau local a conduit à plusieurs considérations.

Puisqu'il a fallu réutiliser le réseau local existant sans avoir à augmenter le nombre de paires, il fut nécéssaire de concevoir des techniques de transmission numérique bidirectionnelle dans deux fils. L'une de ces techniques fait appel à l'annulation d'écho, et est représentée schématiquement pour une réalisation numérique à la figure 1.

Des premier et second terminaux TE1 et TE2 sont localisés aux extrémités d'une ligne de transmission à deux fils LT et transmettent et reçoivent des données numériques. Ainsi les deux sens de transmission empruntent la même ligne à deux fils. Un signal numérique $E_2(t)$ en provenance de la partie d'émission EM2 du second terminal TE2 est perturbé, à travers un coupleur, tel que transformateur différentiel, entre les parties d'émission et de réception EM1 et REC1 dans le premier terminal TE1, par un signal d'écho $E_l^{echo}(t)$ d'un signal émis $E_1(t)$ par la partie EM1. Cet écho se décompose principalement en un écho local (équilibre imparfait du coupleur dans le premier terminal TE1) et un écho distant (mauvaise adaptation d'impédance au niveau du coupleur du second terminal TE2) . Il est donc nécessaire de soustraire au signal total reçu $S(t) = E_2(t) + E_l^{echo}(t)$, le signal écho $E_l^{echo}(t)$ afin de reconstituer le signal émis par le second terminal.

Un annuleur d'écho AN1 inclus dans le premier terminal établit une "réplique" du signal d'écho $E_l^{echo}(t)$, noté $\overline{E_l^{echo}(t)}$, à partir du signal émis $E_1(t)$. Typiquement l'annuleur est réalisé sous la forme d'un filtre numérique comprenant une ligne à retard à N étages, mémorisant les échantillons successifs prélévés au rythme 1/T du signal émis $E_1(t)$. Ceux-ci sont pondérés par un jeu de N coefficients de façon à reproduire l'amplitude et le retard de l'écho réel $E_l^{echo}(t)$. En outre, les valeurs de ces coefficients sont ajustées automatiquement en fonction d'un signal d'erreur $\varepsilon_1(t) = E_2(t) + E_l^{echo}(t) - \overline{E_l^{echo}(t)}$.

Cette technique d'annulation d'écho dans deux fils a conduit à d'autres considérations qui concernent le codage des signaux numériques transmis dans la ligne à deux fils. En effet, une simple transmission en signaux binaires des informations ne permet pas d'optimiser les différents paramètres suivants caractérisant une liaison :

a) la portée du signal émis (atténuation du signal reçu);
b) la facilité de réalisation du filtre numérique de l'annuleur d'écho, en termes d'amplitude et longueur de la réponse impulsionnelle du filtre, et
c) la sensibilité aux bruits dans la ligne.

Plusieurs codes ont alors été préconisés et des codeur et décodeur sont ainsi inclus au sein de chaque terminal, comme montré en COD et DEC dans le terminal TE1 à la figure 1. La possibilité intrinsèque au code en ligne de lui associer une procédure de détection d'erreurs permet une supervision de la qualité de transmission. On citera à titre d'exemple les codes à redondance cyclique (CRC) pour une détection d'erreurs de signaux transmis en code bipolaire.

Dans le cadre du RNIS dit de seconde génération, un code en ligne communément dénommé 4B3T (code alphabétique), défini par le CCITT, est en cours de devenir un standard international et une procédure appropriée pour une détection d'erreurs lui est associée. Cette détection d'erreurs est réalisée au niveau d'un terminal de ligne qui est situé dans un central téléphonique et qui détecte des erreurs de transmission liées à des perturbations dans une ligne à deux fils désservant un terminal de réseau précédant une installation téléphonique d'abonné. Néanmoins, le terminal de ligne ne dispose que des informations d'erreurs relatives à la procédure de détection d'erreurs, choisie précisément en fonction du code en ligne. Une mesure "réelle", au sens taux d'erreur binaire, n'est donc pas obtenue.

De plus, la qualité de transmission d'une ligne pour une installation d'abonné RNIS n'est seulement mesurée que pendant une durée de vingt quatre heures préalablement à la mise en service de la ligne par bouclage de celle-ci. Cette mise en service est effective si le résultat de la mesure est conforme à la Recommandation G.821 définie par le CCITT, fascicule III.5, pages 26 à 35, Genève 1980. Hormis cette procédure de mise en service, aucune information de qualité de transmission n'est accessible à l'exploitant du réseau ainsi qu'à l'abonné. Ces informations de qualité sont seulement disponibles au niveau de l'autocommutateur de rattachement dans le central téléphonique pour éventuellement rompre une liaison lorsque la qualité de transmission est trop dégradée.

Ces informations de qualité, produites par la procédure de détection d'erreurs, sont représentatives de l'état de qualité de transmission dans la ligne, sans donner une mesure exacte de celui-ci.

La présente invention vise à rémédier aux inconvénients précités selon la technique antérieure en permettant de mesurer une qualité réelle de transmission dans la ligne, indépendamment de la procédure de détection d'erreur, cette mesure pouvant être effectuée à tout instant.

A cette fin, un dispositif pour mesurer une qualité de transmission dans une ligne de transmission numérique à deux fils bornée par des premier et second terminaux,

chacun des terminaux incluant des moyens pour coder des données binaires en des données en code de ligne transmises dans la ligne, des moyens pour décoder des données en code de ligne reçues de la ligne en des données binaires et des moyens pour annuler un écho dans les données en code de ligne reçues,
ledit dispositif comprenant des premier et second circuits de transmission bidirectionnelle respectivement analogues au premier et second terminaux et interconnectés en cascade dans ladite ligne aux second et premier terminaux respectivement,

est caractérisé par

- des moyens inclus dans le premier circuit de transmission pour détecter et compter des erreurs en ligne dans les données en code de ligne transmises par le second terminal à travers ladite ligne,
- des moyens pour introduire périodiquement un mot de commande de lecture dans les données binaires transitant du second vers le premier circuit de transmission,
- des moyens pour prélever un nombre d'erreurs en ligne transmis dans les données binaires transitant du premier vers le second circuit de transmission par les moyens pour détecter et compter, en réponse au mot de commande de lecture,
- des moyens pour acquérir des nombres d'erreurs en ligne prélevés pendant une durée de mesure, et
- des moyens pour traiter les nombres d'erreurs en ligne acquis afin de mesurer une qualité de transmission de la ligne.

Ainsi le dispositif de mesure selon l'invention fait appel à des circuits de transmission bidirectionnelle reprenant des fonctions de type répéteur tout en étant transparent aux données convoyées dans la ligne.

En particulier, la ligne peut être une ligne de transmission d'abonné à l'interface U entre un terminal d'installation d'abonné et une terminaison de transmission de liaison de l'autocommutateur de rattachement. Les données binaires transitant entre les premier et second circuits de transmission du dispositif de mesure sont alors structurées en trames binaires comprenant chacune au moins un champ de canal moniteur de terminaux dans lequel un mot de commande de lecture est introduit périodiquement et un nombre d'erreur en ligne est prélévé périodiquement.

De préférence, le dispositif de mesure comprend des moyens pour l'interconnecter d'une manière amovible à la ligne de transmission, dans un répartiteur de central téléphonique desservant ladite ligne.

L'invention a également trait à un système de corrélation de mesure de qualité, comprenant en outre le dispositif de mesure selon l'invention, afin de comparer des nombres d'erreur relatifs aux données en ligne et des nombres d'erreur relatifs aux données binaires selon une procédure connue. Le dispositif de mesure est alors localisé à proximité du premier terminal, tel que terminal de commutation d'autocommutateur de rattachement, pour acquérir périodiquement des nombres d'erreurs en ligne relatifs aux données en code de ligne transmises du second vers le premier terminal.

Le système de corrélation comprend alors des moyens reliés au premier terminal pour transmettre des premières données binaires vers le second terminal et recevoir des secondes données binaires transmises par le second terminal et issues des premières données par bouclage dans le second terminal, des moyens pour comparer les premières et secondes données afin d'établir périodiquement des nombres d'erreurs binaires, et des moyens pour corréler les nombres d'erreurs en ligne et les nombres d'erreurs binaires.

L'invention prévoit un procédé de corrélation de mesure de qualité de transmission mis en oeuvre dans le sytème de corrélation de mesure selon l'invention. Ce procédé comprend :

- l'établissement de nombres d'erreurs en ligne pendant des intervalles de temps de largeur prédéterminée successifs dans une durée de mesure,
- l'établissement de nombres d'erreurs binaires pendant lesdits intervalles de temps, et
- la corrélation desdits nombres en des rapports chacun entre le nombre d'erreurs binaires et le nombre d'erreurs en ligne pendant un même intervalle de temps respectif afin de définir des nombres d'erreurs binaires par erreur en ligne.

Selon d'autres caractéristiques, le procédé est tel que la moyenne des nombres d'erreurs binaires par erreur en ligne est établie, et de telles moyennes sont établies en fonction de caractéristiques de bruits perturbant la ligne de transmission respectivement. Les nombres d'erreurs peuvent être sélectionnés en fonction de seuils afin de définir des paramètres relatifs aussi bien aux erreurs en ligne qu'aux erreurs binaires et corréler lesdits paramètres d'erreurs en ligne et d'erreurs binaires entre eux.

D'autres caractéristiques et avantages de la présente invention apparaîtront plus clairement à la lecture de la description suivante en référence aux dessins annexés correspondants, dans lesquels :

- la figure 1, déjà commentée, est un bloc-diagramme fonctionnel d'un terminal d'extrémité à annuleur d'écho pour ligne de transmission à deux fils, selon la technique antérieure;
- la figure 2 est un bloc-diagramme schématique d'une chaîne de transmission du réseau local reliant un autocommutateur de rattachement à une installation d'abonnés, selon la technique antérieure dans le cadre du RNIS;
- la figure 3 est un bloc-diagramme fonctionnel de l'un des circuits de transmission à annulation d'écho inclus dans des terminaux de réseau et de ligne de la chaîne de transmission de la figure 2;
- la figure 4 montre une structure de trame présente à l'interface système d'un circuit de transmission à annulation d'écho et des signaux d'horloge relatifs à la trame;
- la figure 5 est un schéma montrant l'insertion d'un dispositif de mesure de qualité de transmission selon l'invention au niveau d'un répartiteur de central téléphonique et relatif à une ligne de transmission à deux fils;
- la figure 6 est un bloc-diagramme général du dispositif de mesure de qualité selon l'invention;
- la figure 7 est un bloc-diagramme détaillé d'un circuit logique de transfert inclus dans le dispositif de mesure de qualité selon l'invention;
- la figure 8 est un bloc-diagramme schématique d'un système de corrélation de mesure de qualité établissant une corrélation entre des mesures de qualité de transmission obtenues respectivement avec une procédure de détection d'erreurs en ligne et en terme de nombres d'erreurs binaires;
- la figure 9 est un diagramme temporel d'un bruit impulsif modélisé;
- les figures 10A et 10B sont deux diagrammes de variations de nombres d'erreurs en ligne et nombres d'erreurs binaires par erreur en ligne, relatives à divers paramètres de mesure; et
- la figure 11 est un diagramme fréquentiel de bruit blanc.

A titre d'exemple non limitatif, la description ci-après concerne des systèmes numériques RNIS, dits de seconde génération.

En référence à la figure 2, une chaîne de transmission à ligne à deux fils d'un réseau local, ou de distribution, reliant une installation d'abonné à un autocommutateur de rattachement AR d'un central téléphonique, comprend typiquement, dans le cadre du RNIS un terminal de réseau TNR, une ligne de transmission à deux fils LT, et un terminal de ligne TL. Le terminal de réseau TNR est connecté à l'un des terminaux de commutation de l'autocommutateur AR à travers le terminal de ligne TL. La liaison physique entre le terminal de réseau TNR et le terminal de ligne TL consiste en la ligne d'abonné à deux fils LT et l'un des moyens de connexion, appelé réglette de raccordement REG, d'un répartiteur RE du central téléphonique. Chaque ligne d'abonné est ainsi associée à une entrée-sortie de l'autocommutateur en fonction de la réglette auquelle elle est fixée. La réglette est communément employée pour y connecter des moyens de mesure et de test de ligne divers. Les liens fonctionnels existant à l'interface U, entre les terminaux de réseau TNR et de ligne TL, assurent la transmission bidirectionnelle des informations utiles portées par les canaux numériques B et D d'une trame RNIS typiquement à 64 kbit/s et 16 kbit/s, et remplissent des fonctions de synchronisation, des fonctions d'activation et de désactivation de la ligne de transmission numérique de l'abonné jusqu'à l'interface T, entre l'installation d'abonné et le terminal de réseau TNR, des fonctions d'exploitation et de maintenance et enfin des fonctions de téléalimentation du terminal de réseau TNR.

Il est maintenant rappelé, en référence à la figure 3, la structure d'un circuit de transmission/réception pour interface U, appelé ci-après circuit U, dont une bonne compréhension du fonctionnement est nécessaire pour appréhender les caractéristiques du dispositif de mesure de qualité selon l'invention. De part la symétrie de la chaîne de transmission entre les terminaux TNR et TL, due au traitement bidirectionnel, deux circuits U identiques sont respectivement inclus dans le terminal de réseau TNR et le terminal de ligne TL et assurent la mise en oeuvre de l'interface U, comme montré dans la figure 2. En outre, le terminal de réseau TNR inclut également un circuit de transmission/réception pour interface T, appelé ci-après circuit T, afin d'être interfacé avec l'installation d'abonné conformément aux normes définissant cette interface. Pour sa part, le terminal de ligne TL est connecté au terminal de commutation associé de l'autocommutateur de rattachement à travers l'interface V. En conformité avec la définition de l'interface V préconisée en commun par les exploitants de réseau et les constructeurs, les circuits U ont été standardisé, en faisant appel à une interface dite "interface système" IS, compatible à l'interface V. Ainsi dans le terminal de réseau TNR, en sachant que le circuit de transmission/réception pour interface T est compatible également avec cette interface système, un circuit U et un circuit T peuvent être connectés au moyen de cette interface système.

Coté terminal de ligne TL, l'interface système fournie au niveau du circuit U sert d'interface quasi-directe avec le terminal de commutation. Il sera vu ultérieurement, qu'en fait, la différence fonctionnelle entre les circuits U utilisés pour les terminaux de réseau et de ligne réside en la programmation de certains circuits qu'ils incluent. En dépendance de certaines caractéristiques intrinsèques du réseau RNIS choisies par les exploitants, l'interface système peut assurer des fonctions spécifiques adaptées aux normes nationales d'activation et de maintenance de la chaîne de transmission. L'exploitant du réseau téléphonique français ayant choisi une activation permanente de l'interface U pour surveiller la qualité des liaisons, et une activation à la demande de l'interface T, entre terminal de réseau TNR et installation d'abonnés, il est procédé, lors de la mise en exploitation de la chaîne de transmission, à l'activation du terminal de réseau TNR avec bouclage dans le circuit T, puis désactivation du circuit T et débouclage avec maintien de l'activation du circuit U par lesdites fonctions spécifiques.

En revenant à la figure 3, un circuit de transmission/réception pour interface U comprend principalement, dans une voie de transmission, un embrouilleur EM, un codeur COD, un multiplexeur MUX, un convertisseur numérique-analogique CNA, et un amplificateur d'émission AMP, et dans une voie de réception, un convertisseur analogique-numérique CAN, un soustracteur SO, un égaliseur EG, un démultiplexeur DEMUX, un décodeur DEC et un débrouilleur DEB. Les termes "transmission" et "réception" sont relatifs à l'interface U. Un coupleur CO de type hybride relie l'amplificateur AMP et le convertisseur CAN des voies de transmission et réception à la ligne à deux fils LT. Un annuleur d'écho AN met en oeuvre des fonctions d'annulation d'écho telles que présentées dans le préambule de la description en référence à la figure 1. Un circuit de gestion et d'activation CGA est relié notamment à l'égaliseur EG, aux multiplexeur MUX et démultiplexeur DEMUX et assure notamment la synchronisation des trames à l'interface U ainsi que l'activation de cette interface. Un canal bidirectionnel CT transparent à l'interface U est utilisé pour le dialogue entre l'autocommutateur de rattachement AR et le terminal de réseau TNR. Le multiplexeur MUX multiplexe dans chaque trame à transmettre, un mot de synchronisation MS fourni par le circuit CGA, le canal transparent CT, et les canaux 2B + D embrouillés et codés par l'embrouilleur EM et le codeur COD. Le code est par exemple le code 4B-3T, code qui sera présenté ultérieurement dans la description. Le mot de synchronisation MS dans une trame reçue par le démultiplexeur DEM est utilisé par des moyens de récupération de rythme inclus dans le circuit CGA pour reconstituer la trame et établir divers signaux d'horloge HO. Le contenu du canal transparent CT n'est pas utilisé à l'interface U, et est transmis de l'autocommutateur de rattachement AR au circuit T du terminal TNR via le démultiplexeur DEM pour une activation ou une commande de bouclage.

Comme montré à la figure 3, le circuit de transmission pour interface U comprend un adaptateur d'interface système AD qui, comme signalé précédemment, "standardise" la fabrication du circuit U, qu'il soit inclus à l'interface U dans le terminal de réseau TNR ou dans le terminal de ligne TL. Dans le cas de l'intégration du circuit U dans un terminal de réseau TNR, l'adaptateur d'interface AD est connecté à un adaptateur d'interface dans le circuit de transmission pour interface T du terminal TNR. Dans le cas de son intégration dans le terminal de ligne TL, cet adaptateur est relié via l'interface V au terminal de commutation associé de l'autocommutateur de rattachement AR.

La figure 4 montre une structure de trame présente à l'interface système IS. La trame comprend 8 éléments binaires (eb) pour chacun des canaux CB1 et CB2 de type B, 8 eb pour un canal moniteur CM, 2 eb pour le canal CD de type D, 4 eb pour un canal de commande/indication C/I utilisé pour des procédures d'activation, 1 eb pour le canal transparent CT, et 1 eb pour un canal CV destiné à valider le canal moniteur CM. L'information à l'interface système IS est sous forme binaire, puisque cette interface précède le codeur COD et succède au décodeur DEC. Le codage, par exemple en symboles ternaires selon le code 4B3T, et le décodage ne concerne ainsi que l'interface U. L'interface système se présente physiquement sous la forme de quatre fils (figure 3) :

- deux fils de données entrantes et sortantes $D_{IN}$ et $D_{OUT}$ respectivement pour les deux sens de transmission;
- un fil de rythme H, supportant un signal d'horloge au double de la fréquence des données entrantes et sortantes; et
- un fil d'horloge FRAME de synchronisation de trame.

De manière connue, de tels circuits de transmission pour interface U incluent des fonctions d'interface physique proprement dites avec la ligne d'abonné à deux fils. Ainsi le coupleur CO relatif au circuit U dans la figure 3 est compris, en pratique, dans un circuit d'interface de ligne comprenant des circuits de protection contre les surtensions et surintensités, un transformateur différentiel de ligne et un moyen pour extraire un courant de téléalimentation de terminal-TNR. Au sein du terminal de ligne TL, le circuit d'interface de ligne comprend, en outre, un moyen pour injecter du courant de téléalimentation, dans la ligne LT en direction du terminal de réseau TNR.

L'interconnexion d'un dispositif de mesure de qualité de transmission 1 selon l'invention au niveau du répartiteur RE du central téléphonique est montrée à la figure 5. L'insertion du dispositif 1 "en cascade" au travers de la ligne à deux fils LT reliant le terminal de réseau TNR au terminal de ligne TL s'effectue d'une manière amovible, au niveau de l'une REG des réglettes du répartiteur selon un principe connu. Le dispositif 1 est ainsi introduit dans la ligne d'abonné au moyen de deux couples de fils de liaison $1_0$ et $1_1$ entre la réglette REG et le dispositif 1, pour effectuer une mesure de qualité.

Selon la figure 6, le dispositif de mesure de qualité de transmission 1 selon l'invention comprend deux circuits de transmission bidirectionnelle pour interface U 10 et 11, deux moyens hybrides de protection et couplage schématisés ici par des transformateurs différentiels 12 et 13, un circuit de téléalimentation 14, un circuit logique de transfert 15, un circuit d'acquisition de nombres d'erreurs en ligne 16, et un circuit de traitement de nombres d'erreurs 17.

Côté terminal de réseau TNR, le premier circuit U 10 est relié à la ligne d'abonné à deux fils, au moyen des deux fils de liaison $1_0$, à travers le transformateur 12. Le circuit de téléalimentation 14 alimente la ligne LT en direction du terminal de réseau TNR au moyen d'un couplage capacitif dans l'enroulement primaire du transformateur 12. Côté terminal de ligne TL, le second circuit U 11 est relié à la ligne d'abonné à travers le transformateur 13 et les deux fils de liason $1_1$. Les deux circuits 10 et 11 fournissent, comme déjà signalé, deux interfaces systèmes IS matérialisées par des bus ISO et IS1 à quatre fils reliés au circuit logique de transfert 15. Le circuit d'acquisition de nombres 16, incluant essentiellement une mémoire RAM, mémorise des nombres prélevés et établis par le circuit logique de transfert 15 et transférés par un bus bidirectionnel de transfert BT composé d'un bus de données BD et un bus d'adresses BA. Le circuit de traitement de données 17, de préférence constitué par un microordinateur, lit les nombres acquis pendant une durée de mesure dans le circuit d'acquisition de nombres 16 via un bus bidirectionnel BR pour effectuer un traitement notamment de ces nombres conformément au procédé selon l'invention décrit ultérieurement dans la description.

Les deux circuits de transmission pour interface U 10 et 11 sont analogues à celui présenté à la figure 3. Comme signalé lors de la description de ce circuit, ce dernier présente une interface, dite interface système, qui est standardisée, et il peut donc être intégré ou dans le terminal de ligne TL ou dans le terminal de réseau TNR.

La différence entre les deux circuits U inclus respectivement dans le terminal de réseau TNR et le terminal de ligne TL d'une chaîne de transmission est d'ordre purement logiciel. Notamment, et dans le cadre de l'invention, le circuit U dans le terminal de ligne TL est programmé pour compter des erreurs en ligne, c'est-à-dire relativement à des mots en code en ligne, tel que code ternaire, convoyés par la ligne LT. A cette fin, des moyens de détection et de comptage d'erreurs en ligne dépendant du code en ligne choisi sont inclus dans le circuit U du terminal TL. Comme déjà signalé, à l'interface U d'une chaîne de transmission RNIS de seconde génération, les données binaires sont codées par exemple en code ternaire afin d'optimiser notamment :

a) la portée du signal émis,
b) la facilité de réalisation des filtres numériques dans les annuleurs d'écho des terminaux de réseau TNR et de ligne TL.

Ce code ternaire en ligne, dit 4B3T, associe trois symboles ternaires à 4 éléments binaires, une opération inverse étant réalisée au décodage. Le tableau suivant résume le principe du codage :

| Eléments binaires | Symb. Tern (1) | AS | Symb. Tern (2) | AS | Symb. Tern (3) | AS | Symb. Tern (4) | AS |
|---|---|---|---|---|---|---|---|---|
| 0 0 0 1 | 0 - + | 1 | 0 - + | 2 | 0 - + | 3 | 0 - + | 4 |
| 0 1 1 1 | - 0 + | 1 | - 0 + | 2 | - 0 + | 3 | - 0 + | 4 |
| 0 1 0 0 | - + 0 | 1 | - + 0 | 2 | - + 0 | 3 | - + 0 | 4 |
| 0 0 1 0 | + - 0 | 1 | + - 0 | 2 | + - 0 | 3 | + - 0 | 4 |
| 1 0 1 1 | + 0 - | 1 | + 0 - | 2 | + 0 - | 3 | + 0 - | 4 |
| 1 1 1 0 | 0 + - | 1 | 0 + - | 2 | 0 + - | 3 | 0 + - | 4 |
| 1 0 0 1 | + - + | 2 | + - + | 3 | + - + | 4 | - - - | 1 |
| 0 0 1 1 | 0 0 + | 2 | 0 0 + | 3 | 0 0 + | 4 | - - 0 | 2 |
| 1 1 0 1 | 0 + 0 | 2 | 0 + 0 | 3 | 0 + 0 | 4 | - 0 - | 2 |
| 1 0 0 0 | + 0 0 | 2 | + 0 0 | 3 | + 0 0 | 4 | 0 - - | 2 |
| 0 1 1 0 | - + + | 2 | - + + | 3 | - - + | 2 | - - + | 3 |
| 1 0 1 0 | + + - | 2 | + + - | 3 | + - - | 2 | + - - | 3 |
| 1 1 1 1 | + + 0 | 3 | 0 0 - | 1 | 0 0 - | 2 | 0 0 - | 3 |
| 0 0 0 0 | + 0 + | 3 | 0 - 0 | 1 | 0 - 0 | 2 | 0 - 0 | 3 |
| 0 1 0 1 | 0 + + | 3 | - 0 0 | 1 | - 0 0 | 2 | - 0 0 | 3 |
| 1 1 0 0 | + + + | 4 | - + - | 1 | - + - | 2 | - + - | 3 |

Les signes +, - et 0 désignent les trois symboles du code ternaire. Une première colonne du tableau donne tous les mots à quatre éléments binaires chacun. Quatre colonnes numérotées de 1 à 4 sont des alphabets de mots à trois symboles ternaires à associer respectivement, aux mots à quatre éléments binaires. L'alphabet utilisé pour le codage d'un mot à quartet binaire dépend de la somme algébrique des trois symboles ternaires précédemment transmis. Le numéro AS de l'alphabet suivant qui est à utiliser pour le prochain mot ternaire est ainsi indiqué à droite du mot ternaire transmis, dans le tableau ci-dessus. Hormis lors d'une initialisation de la procédure, le numéro d'un alphabet suivant pour coder quatre éléments binaires suivants est obtenu par la somme algébrique courante des trois éléments ternaires courants. A titre d'exemple, les mots successifs : "1001", "1001", "1111" et "1100", en supposant que le premier alphabet (1) soit choisi pour le codage initial du premier mot binaire "1001", sera respectivement codés "+ - +" impliquant l'alphabet numéroté (2) pour le mot suivant "1001", en "+ - +" impliquant l'alphabet numéroté (3) pour le mot suivant "1111", en "0 0 -" impliquant l'alphabet numéroté (2) pour le mot suivant "1100", et en "- + -" impliquant l'alphabet numéroté (1) pour le codage du mot binaire suivant.

Une procédure "naturelle" de détection d'erreurs en transmission dans la ligne d'abonné LT, à l'interface U, est alors mise en oeuvre par programmation du circuit U dans le terminal de ligne TL qui, à partir de la somme algébrique courante résultante des mots ternaires reçus en code 4B3T, incrémente un compteur d'erreurs en ligne inclus dans le circuit CGA lorsque cette somme est égale à 0 ou strictement supérieure à 4. Une incrémentation du compteur résulte d'un symbole ternaire erroné et donc d'une erreur en ligne, sachant que l'algorithme de codage est conçu pour que la somme algébrique courante soit toujours comprise entre 1 et 4. De préférence, en pratique les erreurs en ligne ne sont détectées que dans l'un ou les deux canaux d'informations utiles CB1 et CB2.

Néanmoins, il apparaît qu'un symbole ternaire dans un mot codé ternaire n'entraîne pas systématiquement un signalement d'erreur en ligne, par exemple dans le cas où la somme algébrique courante est bien comprise entre 1 et 4 et des marques positive et négative + et - dans un mot sont inversées, ou l'une de ces marques est remplacée par une autre de polarité opposée.

Le fonctionnement du dispositif de mesure de qualité en transmission selon l'invention est maintenant décrit en référence à la figure 6.

Le principe de l'annulation d'écho interdit d'insérer en série un dispositif à haute impédance sur la ligne. En effet, les données en code de ligne étant émises et reçues simultanément en ligne, l'extraction de l'information utile dans une voie de réception d'un terminal doit faire appel au traitement par annulation d'écho. C'est précisément le rôle des circuits de retransmission bidirectionnelle 10 et 11 qui sont analogues au circuit de transmission pour interface U présenté précédemment.

Une phase préliminaire de convergence des coefficients dans les annuleurs d'écho des deux circuits 10 et 11 est nécessaire. Elle consiste en deux périodes de transmission successives attribuées au circuit 10 et 11 afin que chaque circuit U 10 et 11 mesure l'écho de son signal transmis ce qui se traduit au sein de l'annuleur d'écho du circuit U par un calcul d'un vecteur de coefficients qui sert à soustraire en réception au signal global reçu tout ce qui n'est pas une information émise par le circuit et renvoyée par écho, comme décrit dans le préambule de la description.

Ainsi le dispositif 1 doit assurer les fonctions suivantes, sachant qu'il est inséré entre le terminal de réseau TNR et le terminal de ligne TL :

- traiter l'annulation d'écho vis à vis des deux terminaux TNR et TL, comme dans un répéteur d'une ligne de transmission,
- téléalimenter le terminal de réseau TNR (fonction spécifique au réseau téléphonique français); et
- afin de mesurer une qualité de transmission en ligne entre les deux terminaux, récupérer des indicateurs (nombres) d'erreurs comptabilisées lors de procédure de détection d'erreur en ligne et fonction du codage en ligne tel que 4B3T.

Toutes ces fonctions sont mises en oeuvre dans le dispositif 1 selon l'invention.

Les fonctions de protection et de téléalimentation ont été présentées précédemment et sont établies notammment par les transformateurs 12 et 13 et le circuit de téléalimentation 14.

Les circuits 10 et 11 assurent des annulations d'écho respectivement vis à vis du terminal de réseau TNR et du terminal de ligne TL. Comme déjà signalé, les deux circuits 10 et 11 sont de type standardisé, et seule leur programmation les différencie. Ainsi le circuit 10 est programmé en mode terminal de ligne TL, notamment pour intégrer une procédure spécifique de détection d'erreurs en ligne, analogue à celle également mise en oeuvre au niveau du terminal de ligne TL. Le circuit 10 comprend notamment un moyen soustracteur d'écho SO qui est localisé dans une voie de réception du circuit 10 recevant des données en code de ligne du terminal TNR.

Une procédure du type de celle présentée précédemment pour le code 4B3T entraîne l'incrémentation d'un compteur dans le terminal TL lorsqu'une erreur en ligne est détectée. Le nombre d'erreurs en ligne mémorisé dans le compteur est utilisé par l'autocommutateur AR pour éventuellement rompre une liaison lorsque la qualité de transmission est trop dégradée.

Le circuit 10 programmé en mode terminal de ligne 10 inclut des moyens de détection et comptage d'erreurs en ligne reliés à la voie de réception du circuit 10 et comprenant notamment un compteur comptabilisant un nombre d'erreurs en ligne. Ce nombre d'erreurs en ligne est fonction de la procédure de détection d'erreurs en ligne, qui dépend du codage, mais ne donnant pas une mesure de la qualité réelle de transmission, au sens taux d'erreur binaire. Le circuit logique de transfert 15 est connecté aux deux adaptateurs d'interface système AS dans les circuits de transmission 10 et 11 au moyen de deux bus à quatre fils ISO et IS1. Deux fils du bus IS1 fournissent un signal d'horloge H et un signal d'horloge de trame FRAME nécessaires au fonctionnement synchrone du circuit 15 et du circuit 10. Deux interfaces systèmes IS sont ainsi établies par le circuit 15 respectivement avec les deux circuits 10 et 11. Si l'on se reporte à la figure 4, il peut être noté que la trame à une interface système comprend, en outre, un canal moniteur CM et un canal de validation de canal moniteur CV. Ces deux canaux sont utilisés principalement par le circuit logique de transfert 15 pour lire et prélever des nombres d'erreurs en ligne dans le compteur d'erreurs du circuit 10 programmé à cet effet.

Une telle lecture de compteur dans le terminal de ligne TL dans une chaîne de transmission RNIS est habituellement réalisée par l'autocommutateur AR pour surveiller la qualité de transmission via le canal moniteur CM de l'interface V. Toutefois, les indicateurs d'erreurs en ligne établis par ce dernier compteur ne sont pas accessibles par l'exploitant du réseau.

L'opération de lecture du compteur d'erreurs en ligne des moyens de détection et comptage d'erreurs dans le circuit 10 par le circuit logique de transfert 15 consiste en la validation du canal moniteur par la transmission d'un bit "0" dans le canal de validation CV ainsi qu'en la transmission d'un mot de commande de lecture de compteur dans le canal moniteur CM. Le bit de validation de canal moniteur et le mot de commande de lecture sont transmis dans une trame de données binaires portée par le fil $D_{IN}$, entrant dans l'adaptateur d'interface système dans le circuit 10. En réponse, le circuit 10 programmé en mode TL transmet le nombre d'erreurs en ligne sous forme binaire lu dans le compteur, dans le canal moniteur CM sur le fil $D_{OUT}$ sortant de l'adaptateur d'interface système. Le circuit 15 dispose, par période de transmission de commande de lecture du compteur et également de remise à zéro du compteur, de l'ordre de la seconde par exemple, de nombres d'erreurs en ligne totalisés dans le compteur du circuit 10. Ces nombres d'erreurs en ligne sont écrits dans le circuit d'acquisition de données 16 par le circuit 15 via le bus de transfert BT.

Ainsi le circuit de traitement de données 17 dispose à travers le bus BR, de nombres d'erreurs en ligne lus périodiquement dans le compteur et mémorisés dans le circuit 16. Le circuit de traitement 17 peut alors procéder à une mesure de la qualité de transmission en ligne en fonction de ces nombres d'erreurs en ligne qui, comme déjà dit, ne représentent pas la qualité réelle de transmission puisqu'ils sont fonction du codage sur la ligne et plus précisément de la procédure de détection d'erreurs, choisie en fonction de ce codage. En pratique, au lieu de déterminer une erreur dans un mot ternaire en ligne comme précisé en référence au tableau d'alphabets ci-dessus, le compteur dans le circuit 10 détecte des erreurs dans des blocs ternaires par exemple ayant une longueur de trame ou de plusieurs trames.

En référence à la figure 7, le circuit logique de transfert 15 comprend un processeur 151, un circuit d'interface parallèle 152, un premier circuit logique de comptage 153, un diviseur de fréquence 153a, un convertisseur série-parallèle 154, un second circuit logique de comptage 155, un diviseur de fréquence 155a, une mémoire à 8 bits 156, un comparateur 157a, une mémoire à 4 bits 157b, et quatre registres à décalage 158a à 158d de huit bits.

Les deux diviseurs de fréquence 153a et 155a sont des diviseurs de fréquence par deux et divisent la fréquence du signal d'horloge H dans les bus d'interface système IS1 et IS2 par deux en des signaux d'horloge de données H/2 ayant chacun une fréquence égale à la fréquence des données entrantes et sortantes dans les adaptateurs d'interface des circuits 10 et 11. Les signaux d'horloge de données et de trame, H et FRAME, illustrés à la figure 4, sont transmis du circuit 11 vers le circuit 10, via les bus IS1 et ISO, afin que le circuit "esclave" 10 se synchronise sur le circuit "maître " 11, d'une manière analogue à la sychronisation directe du circuit U dans le terminal de réseau TNR par le circuit U dans le terminal de ligne TL, en l'abscence du dispositif 1.

Afin de lire un nombre d'erreurs en ligne dans le compteur du circuit 10, les circuits 155 à 158d établissent un mot de commande de lecture à transmettre dans le canal moniteur CM. Les quatres registres à décalage 158a à 158d à huit étages de bascules D chacun imposent un retard d'une trame à 32 bits (figure 4) aux données binaires transmises du terminal de ligne TL via le circuit 11 et le fil $D_{OUT}$ dans le bus IS1 vers le terminal de réseau TNR via le fil $D_{IN}$ du bus ISO et le circuit 10, en les mémorisant temporairement et les décalant à la fréquence du signal d'horloge de données H/2. Pour insérer le mot de commande de lecture dans une trame, le circuit logique de comptage 155 reçoit le signal d'horloge de trame FRAME et compte 32 périodes du signal d'horloge de données H/2 du bus IS1 après le début d'une trame, afin de commander la lecture de la mémoire morte 156 contenant un mot de commande de lecture "11101111" (EF en code hexadécimal) et charger celui-ci dans le registre à décalage 158c contenant le champ à 8 bits du canal moniteur CM lors de la lecture. Simultanément, le circuit de comptage 155 introduit un bit "0" dans le premier étage du registre 158d et donc dans le champ du canal CV. Ainsi, la détection des 8 bits "11101111" du canal moniteur par le circuit de gestion du circuit 10 commande la lecture du compteur dans le circuit 10.

Le comparateur 157a et la mémoire 157b sont utilisés pour le canal de commande et indication C/I à l'interface système. En effet, dans une chaîne de transmission RNIS, ce canal d'activation C/I est notamment utilisé par l'autocommutateur AR pour commander un bouclage de contrôle des voies de réception et transmission dans le circuit T du terminal de réseau TNR. Le circuit de transmission pour interface U du terminal de réseau TNR reçoit un mot de commande de bouclage à 4 bits à "1010" et le transcode en un mot transcodé "1110" commandant un moyen de bouclage du circuit U. Le circuit 11 du dispositif 1 selon l'invention, programmé en mode terminal de réseau TNR, opère ce même transcodage. Il est donc nécessaire de remodifier les données du canal C/I afin d'assurer la transparence du dispositif 1, c'est-à-dire assurer que le terminal de réseau TNR recouvre bien la commande de bouclage initiale transmise par l'autocommutateur AR. Ainsi en réponse à un signal d'activation SA2 produit par le circuit logique de comptage 155 après 32 périodes de signal d'horloge H/2 succédant au début d'une trame (figure 4), le comparateur 157a compare les sorties de quatre bascules centrales du registre 158d correspondant au champ du canal C/I avec quatres bits "1110".

Lorsque cette comparaison est positive, le comparateur 157a lit la mémoire morte 157b pour inscrire le mot de commande de bouclage à quatre bits "1010" dans les quatre bascules du registre 158d ce qui assure ainsi la transparence du dispositif 1.

En réponse à la lecture du compteur d'erreurs en ligne dans le circuit U 10 programmé en mode terminal de réseau TNR, ce dernier transfère un nombre d'erreurs en ligne codé en 8 bits et lu dans le compteur puis écrit dans le champ du canal moniteur CM porté par le fil $D_{OUT}$ de l'interface système ISO.

Le convertisseur tampon série-parallèle 154 prélève et convertit le nombre d'erreurs en ligne lu reçu sous forme sérialisée dans le fil $D_{OUT}$ du bus ISO en un mot à 8 bits parallèles appliqué au circuit d'interface parallèle 152. Ce prélèvement est validé par le circuit logique de comptage 153 en réponse à 24 périodes du signal d'horloge H/2 (figure 4) succédant au signal FRAME relatif aux trames transmises du fil $D_{OUT}$ du bus ISO du circuit 10 vers le fil $D_{IN}$ du bus IS1 du circuit 11.

Le processeur 151, après un signal d'interruption INT généré par le circuit d'interface 152 lors de la réception d'un nombre d'erreurs lu dans le compteur du circuit 10, transfère le nombre d'erreurs en ligne lu dans un registre du circuit d'interface 152 vers le circuit d'acquisition de données 16 via le bus de transfert BT, et remet à zéro (RAZ) le convertisseur 154.

Après un nombre prédéterminé de lectures périodiques de nombres d'erreurs en ligne établis par le compteur du circuit 10, par exemple toutes les secondes environ, le circuit d'acquisition des données 16 possède une série de nombres d'erreurs en ligne lus à différents instants.

Il est maintenant présenté le traitement effectué par le circuit 17 sur ces nombres d'erreurs en ligne mémorisés dans le circuit d'acquisition 16.

Comme signalé précédemment, chaque nombre d'erreurs en ligne n'est pas représentatif d'un nombre d'erreurs binaires réelles après décodage, mais uniquement d'erreurs en ligne détectées suivant la procédure de détection d'erreurs en ligne mise en oeuvre dans le circuit 10, cette procédure dépendant du code en ligne entre les terminaux de réseau TNR et de ligne TL. Selon l'invention, une corrélation est établie entre les nombres d'erreurs en ligne et les nombres d'erreurs binaires.

Avant de décrire cette corrélation, il est rappelé les objectifs définis par la recommandation G.821 du CCITT concernant la qualité de transmission dans un Réseau Numérique à Intégration de Services (RNIS). Trois paramètres relatifs aux erreurs binaires ont été définis dans cette recommandation par rapport à trois seuils respectifs :

- SAE (seconde avec erreur) correspond à une seconde avec au moins une erreur binaire (premier seuil);
- SGE (seconde gravement erronée) correspond à une seconde avec au moins 128 erreurs binaires pour un débit de 128 kbit/s (second seuil);
- MD (minute dégradée) correspond à 60 secondes (1 minute) consécutives, avec au moins 8 erreurs binaires (troisième seuil) par seconde pour un débit de 128 kbit/s, hormis les erreurs binaires prises en compte pour les secondes gravement érronées (SGE).

En règle générale, la Recommandation G.821 spécifie la qualité de transmission en tenant compte de la dégradation des données transmises, et notamment de la répartition des erreurs binaires dans le temps. Une mise en service d'une chaîne de transmission pour une installation d'abonné succède au codage et à la transmission au niveau du terminal de ligne TL, d'une séquence binaire pseudo-aléatoire dans un canal B qui est comparée avec une séquence binaire renvoyée à travers une boucle dans le terminal de réseau TNR et reçue et décodée par le terminal TL. La mise en service est effective si cette comparaison donne des résultats conformes à des objectifs de qualité définis dans la recommandation G.821, ces objectifs constituant des pourcentages des paramètres définis ci-dessus par rapport à une durée de mesure de mise en service prédéterminée, typiquement vingt quatre heures.

Le circuit de traitement des données 17 est programmé en fonction de données expérimentales pour effectuer une corrélation entre des nombres d'erreurs en ligne lus dans le circuit 16 et des nombres d'erreurs binaires correspondants relatifs à des mêmes périodes de mesure.

Il est concevable qu'un type de bruit donné affecte les données codées transmises dans la ligne d'une certaine façon relativement au comptage des erreurs en ligne selon la procédure de détection d'erreurs en ligne. Par exemple tel type de bruit entraînera un comptage d'un grand nombre d'erreurs en ligne sans pour autant qu'il y ait beaucoup d'erreurs binaires et inversement.

La figure 8 montre un système de corrélation de mesure de qualité selon l'invention, fondé sur cette dernière remarque. On retrouve dans cette figure une chaîne de transmission incluant un terminal de réseau TNR et un terminal de ligne TL reliés par une ligne d'abonné à 2 fils LT à travers l'interface U. Le dispositif de mesure de qualité 1 est interconnecté dans le répartiteur RE. Du côté du terminal de ligne TL, un émetteur-récepteur pseudo-aléatoire ER émet et reçoit des données binaires de canal B après bouclage de celles-ci dans le terminal de réseau TNR au moyen d'un circuit de bouclage BO. Les données binaires reçues après décodage sont traitées par un circuit de traitement CTG qui effectue des mesures de paramètres de qualité relatifs à des erreurs binaires pendant des périodes de temps égales soit à la seconde, soit à la minute, conformément à la recommandation G.821, et qui transmet le résultat de ces mesures du circuit 17 au dispositif 1. Des moyens de génération de bruit GB sont prévus pour générer des bruits affectant la qualité de la transmission. Un bruit perturbant la transmission dans la ligne, une corrélation entre nombres d'erreurs binaires au sens de la recommandation G.821 et nombres d'erreurs en ligne produits dans le circuit 10 du dispositif 1 peut être établie. La recommandation G.821 se référant à des périodes minimales d'une seconde, la lecture du compteur d'erreurs en ligne du circuit 10, via le canal moniteur CM, est réalisée pour chaque période d'une seconde.

Pour analyser la qualité de transmission, il est nécessaire de modéliser différents types de bruit susceptibles d'interférer avec les données transmises dans la ligne d'abonné LT. Trois natures de bruits sont distingués :

- un bruit blanc modélisant divers bruits de diaphonie avec des lignes voisines et d'environnement éléctromagnétique de la ligne LT;
- un bruit impulsif dû à des perturbations électromagnétiques d'un environnement industriel, bureautique et/ou électroménager; et
- un bruit dû aux lignes d'énergie électrique à composante fondamentale de 50 Hz ou 60 Hz.

A titre d'exemple, le premier bruit défini ci-dessus est analysé ci-après.

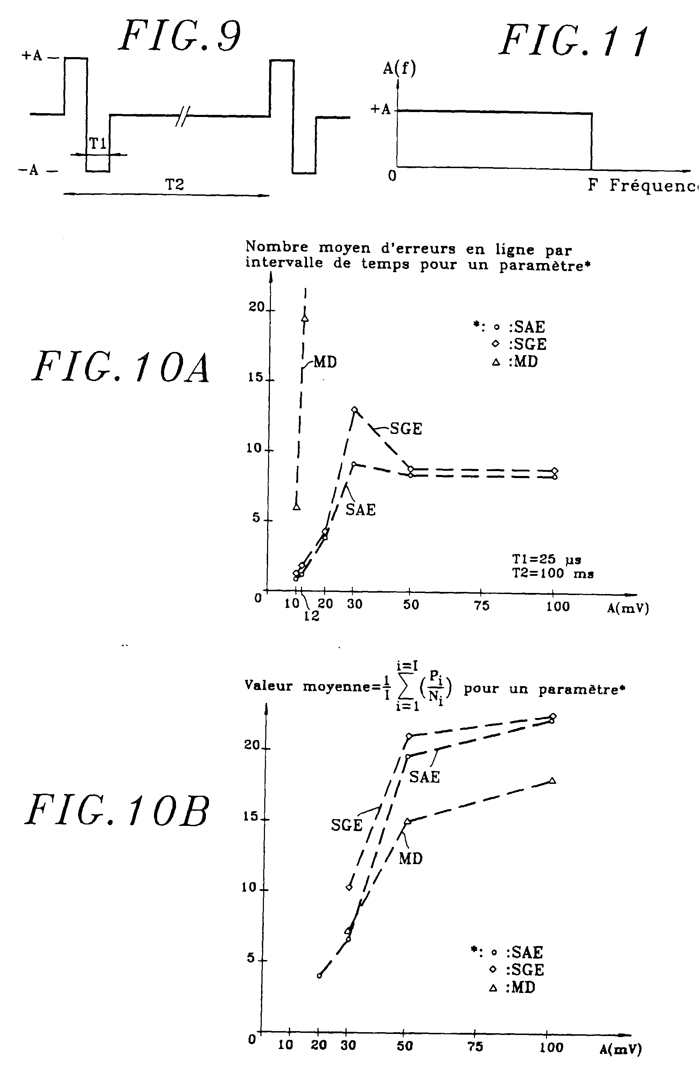

Dans cette analyse, les moyens de génération de bruit GB (figure 8) génèrent un bruit impulsif ayant une forme général de signal présenté à la figure 9. Ce signal présente une période T2 qui débute par deux créneaux successifs ayant des polarités positive et négative A et -A et une largeur T1 < T2, typiquement T1 = 25 µs et T2 = 100 ms.

Ce bruit est injecté par les moyens GB dans la ligne LT. Puisque le circuit de traitement CTG et le dispositif de mesure 1 sont synchronisés par intervalles de temps d'une seconde et donc d'une minute, le circuit CTG et le dispositif 1 établissent respectivement les nombres moyens d'erreurs binaires et des nombres moyens d'erreurs en ligne pour des intervalles de temps d'une seconde successifs composant une durée de mesure donnée afin de calculer respectivement des nombres moyens d'erreurs en ligne et les trois paramètres d'erreurs binaires relatifs au bruit injecté pendant la même période de mesure. Ainsi à titre d'exemple, pendant une durée de mesure d'une heure, le circuit 17 du dispositif 1 constate qu'en moyenne, le paramètre d'erreurs en ligne SAE correspond au comptage de N erreurs définies selon la procédure de détection d'erreurs en ligne durant chacune des secondes successives de la durée de mesure. Bien entendu ces mesures sont étendues aux paramètres d'erreurs en ligne SGE et MD. Des nombres moyens d'erreurs en ligne établis pour les trois paramètres SAE, SGE et MD validés sur les intervalles de temps, secondes et minutes, de la durée de mesure sont ainsi obtenus.

Simultanément pour chacun des intervalles de temps à la suite duquel un paramètre d'erreur en ligne est validé, le circuit de traitement CTG calcule également un nombre d'erreurs binaires dans les données reçues durant cet intervalle de temps. Un nombre moyen d'erreurs binaires pendant la durée de mesure pour chaque paramètre d'erreurs binaires G.821 est alors déduit dans le circuit CTG.

Ainsi, pour chaque durée de mesure et pour une caractéristique de bruit donnée sont associés un nombre moyen d'erreurs en ligne établi selon la procédure de détection d'erreurs en ligne et un nombre moyen d'erreurs binaires, tous deux relatifs à l'un des paramètres. Le circuit 17 dans lequel sont rapatriés les nombres d'erreurs en ligne et les nombres d'erreurs binaires, corrèlent alors les deux types de mesure en terme de rapports $N_i$ entre le nombre d'erreurs binaires $P_i$ et le nombre d'erreurs en ligne $N_i$ respectivement calculés pour les I intervalles de temps de la durée de mesure, ces rapports définissant des nombres d'erreurs binaires par erreur en ligne pour chaque paramètre validé. Puis le circuit 17, calcule la valeur moyenne de ces rapports, i étant un entier compris entre 1 et le nombre I d'intervalles de temps de la durée de mesure pour le paramètre considéré. Le circuit 17 établit ainsi trois valeurs moyennes relatives respectivement aux trois paramètres SAE, SGE et MD.

A titre d'exemple, les figures 10A et 10B montrent des courbes expérimentales représentant respectivement les variations du nombre moyen d'erreurs en ligne comptabilisées par intervalles de temps et de la valeur moyenne de nombres d'erreurs binaires par erreur en ligne, en fonction de l'amplitude de créneau A du bruit impulsif représenté à la figure 9 pour chacun des trois paramètres SAE, SGE et MD. Les valeurs de l'amplitude A appartiennent à une plage représentative du bruit impulsif pouvant affecter une ligne.

Ces résultats sont particulièrement intéressants. Ils montrent par exemple qu'un bruit impulsif à amplitude comprise entre 75 mV et 100 mV entraîne pour une seconde gravement erronée SGE, le comptage d'erreurs en ligne selon la procédure de détection d'erreurs en ligne en un nombre relativement faible (figure 10A) de l'ordre de 9. Par contre le nombre moyen d'erreurs binaires par erreur en ligne comptée (figure 10B) est quant à lui relativement élevé pour le paramètre SGE. En résumé il en résulte que les bruits impulsifs, lorsqu'ils sont d'amplitude élevée, induisent un nombre relativement faible d'erreurs en ligne pour chaque seconde gravement érronée SGE mais contribue à de nombreuses erreurs binaires par erreur en ligne.

Des mesures identiques ont été réalisées pour une injection de bruit blanc dans la ligne, un bruit blanc ayant une représentation spectrale montrée à la figure 11. En théorie un tel bruit blanc est un bruit ayant une amplitude constante sur toute la plage infinie des fréquences. En pratique, il est limité à une plage finie F. Les résultats pour le bruit blanc différent de ceux présentés pour une injection de bruits impulsifs.

Ces mesures montrent qu'un signal de bruit caractéristique donné influence la qualité de la transmission d'une manière particulière vis à vis du nombre des erreurs en ligne.

Dans la pratique, et en revenant à la figure 6, des mesures sont réalisées pour différents bruits typiques perturbant la ligne de transmission d'abonné LT et représentatifs d'environnements de la ligne d'abonné lors de son exploitation réelle, tels que résultant de lignes téléphoniques, ou électriques ou radioélectriques, voisines à la ligne LT, résultant de machines domestiques ou industrielles proches de la ligne LT, etc...

Le circuit de traitement de données 17 mémorise en fonction d'un environnement donné de la ligne d'abonné, dont une mesure de qualité est souhaitée, des données relatives à l'environnement du type de celles présentées en référence aux figures 10A et 10B.

Comme signalé, le circuit de traitement logique 15 lit le compteur du circuit 10 toutes les secondes et transfère des nombres d'erreurs en ligne lus dans le compteur vers le circuit d'acquisition 16 où ils sont mémorisés. Ainsi à la fin d'une durée de mesure, le circuit de traitement des données 17 traite ces nombres d'erreurs en ligne pour en déduire une mesure de qualité en termes de paramètres d'erreurs en ligne et d'erreurs binaires et de nombres moyens d'erreurs binaires par erreur en ligne pour chacun des trois paramètres, et éventuellement pour d'autres paramètres et statistiques de mesure.

Il apparaîtra évident à l'homme du métier que des modifications mineures peuvent être introduites dans le cadre de l'invention. A titre d'exemple et en se référant à la figure 7, il peut être prévu de préléver outre des données du canal moniteur CM, des informations du canal commande/indication C/I, afin d'obtenir un état de la liaison de "signalisation" entre l'autocommutateur de rattachement AR et le terminal de réseau TNR.

Seuls les circuits 151 à 154 seront alors utilisés afin de réaliser ce prélèvement sans bien entendu nécessiter l'insertion d'une quelconque commande de lecture dans un champ de canal.

## Revendications

**1.** Dispositif (1) pour mesurer une qualité de transmission dans une ligne de transmission numérique à deux fils (LT) bornée par des premier et second terminaux (TL, TNR),

chacun des terminaux incluant des moyens (COD) pour coder des données binaires en des données en code de ligne transmises dans la ligne, des moyens (DEC) pour décoder des données en code de ligne reçues de la ligne en des données binaires et des moyens (AN, S0) pour annuler un écho dans les données en code de ligne reçues,
ledit dispositif comprenant des premier et second circuits de transmission bidirectionnelle (10, 11) respectivement analogues au premier et second terminaux (TL, TNR) et interconnectés en cascade dans ladite ligne aux second et premier terminaux respectivement,

caractérisé par

- des moyens (CGA) inclus dans le premier circuit de transmission (10) pour détecter et compter des erreurs en ligne dans les données en code de ligne transmises par le second terminal (TNR) à travers ladite ligne (LT),
- des moyens (155, 156, 158c) pour introduire périodiquement un mot de commande de lecture (CM = "11101111") dans les données binaires ($D_{OUT}$, IS1) transitant du second (11) vers le premier circuit de transmission (10),
- des moyens (151 - 154) pour prélever un nombre d'erreurs en ligne transmis dans les données binaires ($D_{OUT}$, IS2) transitant du premier (10) vers le second circuit de transmission (11) par les moyens pour détecter et compter, en réponse au mot de commande de lecture,
- des moyens (16) pour acquérir des nombres d'erreurs en ligne prélevés pendant une durée de mesure, et
- des moyens (17) pour traiter les nombres d'erreurs en ligne acquis afin de mesurer une qualité de transmission de la ligne (LT).

**2.** Dispositif conforme à la revendication 1, caractérisé en ce que les données binaires transitant entre les premier et second circuits de transmission (10,11) sont structurées en trames comprenant chacune au moins un champ de canal moniteur de terminaux (CM) dans lequel un mot de commande de lecture est introduit périodiquement et un nombre d'erreur en ligne est prélévé périodiquement.

**3.** Dispositif conforme à la revendication 2, caractérisé en ce que, outre un nombre d'erreur en ligne, des données de signalisation sont prélévées dans un autre champ de canal (C/I) desdites trames, indépendamment d'un quelconque mot de commande de lecture.

**4.** Dispositif conforme à la revendication 2 ou 3, caractérisé en ce que l'ensemble du second circuit de transmission bidirectionnelle (11) et des moyens pour introduire et prélever (15) est transparent à des informations de commande (C/I) échangées entre lesdits terminaux (TL, TNR).

**5.** Dispositif conforme à l'une quelconque des revendications 1 à 4, caractérisé en ce qu'il comprend des moyens ($1_0$, $1_1$, 12, 13) pour l'interconnecter d'une manière amovible à la ligne de transmission (LT), dans un répartiteur (RE) de central téléphonique (AR) desservant ladite ligne.

**6.** Système de corrélation de mesure de qualité comprenant ledit dispositif (1) conforme à l'une quelconque des revendications 1 à 5 et localisé à proximité du premier terminal (TL) pour acquérir périodiquement des nombres d'erreurs en ligne relatifs aux données en code de ligne transmises du second vers le premier terminal, des moyens (ER) reliés au premier terminal (TL) pour transmettre des premières données binaires vers le second terminal (TNR) et recevoir des secondes données binaires transmises par le second terminal et issues des premières données par bouclage (BO) dans le second terminal, des moyens (CTG) pour comparer les premières et secondes données afin d'établir périodiquement des nombres d'erreurs binaires, et des moyens (17) pour corréler les nombres d'erreurs en ligne et les nombres d'erreurs binaires.

**7.** Procédé de corrélation de mesure de qualité de transmission mis en oeuvre dans le système de corrélation de mesure conforme à la revendication 6, comprenant

- l'établissement de nombres d'erreurs en ligne ($N_i$) pendant des intervalles de temps de largeur prédéterminée successifs dans une durée de mesure,
- l'établissement de nombres d'erreurs binaires ($P_i$) pendant lesdits intervalles de temps, et
- la corrélation desdits nombres en des rapports chacun entre le nombre d'erreurs binaires ($P_i$) et le nombre d'erreurs en ligne ($N_i$) pendant un même intervalle de temps respectif afin de définir des nombres d'erreurs binaires par erreur en ligne.

**8.** Procédé conforme à la revendication 7, selon lequel la moyenne des nombres d'erreurs binaires par erreur en ligne est établie, et de telles moyennes sont établies en fonction de caractéristiques de bruits perturbant la ligne de transmission (LT) respectivement.

**9.** Procédé conforme à la revendication 7 ou 8, selon lequel les nombres d'erreurs sont sélectionnés en fonction de seuils afin de définir des paramètres (SAE, SGE, MD) relatifs aussi bien aux erreurs en ligne qu'aux erreurs binaires et corréler lesdits paramètres d'erreurs en ligne et d'erreurs binaires entre eux.

**Patentansprüche**

**1.** Anordnung (1) zur Messung einer Übertragungsqualität in einer digitalen Zweidrahtübertragungsleitung (LT), die durch erste und zweite Endeinrichtungen (TL, TNR) begrenzt ist,

wobei jede Endeinrichtung Einrichtungen (COD) zur Codierung von binären Daten in Daten im Leitungscode, die in der Leitung übertragen werden, Einrichtungen (DEC) zur Decodierung der von der Leitung empfangenen Daten im Leitungscode, die in binäre Daten und Einrichtungen (AN, SO) zur Löschung eines Echos in den empfangenen Daten im Leitungscode aufweist,

und wobei die Anordnung erste und zweite Schaltungen zur bidirektionalen Übertragung (10, 11) analog den ersten und zweiten Endeinrichtungen (TL, TNR) aufweist, die in Kaskade in der Leitung mit den zweiten und ersten Endeinrichtungen verbunden sind,

gekennzeichnet durch

- Einrichtungen (CGA) in der ersten Übertragungsschaltung (10) zur Detektierung und zum Zählen von Leitungsfehlern in den Daten im Leitungscode, die von der zweiten Endeinrichtung (TNR) über die Leitung (LT) übertragen werden,

- Einrichtungen (155, 156, 158c) zum periodischen Einfügen eines Lesebefehlwortes (CM = "11101111") in die binären Daten ($D_{OUT}$, IS1), die von der zweiten (11) zur ersten Übertragungsschaltung (10) gelangen,

- Einrichtungen (151 - 154) zur Entnahme einer Leitungsfehlerzahl, die in den binären Daten ($D_{OUT}$, IS2) übertragen wird, die von der ersten (10) zur zweiten Übertragungsschaltung (11) durch die Einrichtungen zur Detektierung und zum Zählen als Antwort auf das Lesebefehlswort gelangen,

- Einrichtungen (16) zur Aufnahme von entnommenen Leitungsfehlerzahlen während einer Meßdauer, und

- Einrichtungen (17) zur Verarbeitung der aufgenommenen Leitungsfehlerzahlen, um eine Übertragungsqualität der Leitung (LT) zu messen.

**2.** Anordnung nach Anspruch 1, dadurch gekennzeichnet, daß die binären Daten, die zwischen den ersten und zweiten Übertragungsschaltungen (10, 11) passieren, in Raster strukturiert sind, von denen jedes mindestens ein Kanalfeld zur Überwachung der Endeinrichtung (CM) aufweist, in das ein Lesebefehlswort periodisch eingefügt und eine Leitungsfehlerzahl periodisch entnommen wird.

**3.** Anordnung nach Anspruch 2, dadurch gekennzeichnet, daß außer einer Leitungsfehlerzahl Signaldaten in einen anderen Kanal fallen (C/I) und unabhängig von einem Lesebefehlswort dem Raster entnommen werden.

**4.** Anordnung nach Anspruch 2 oder 3, dadurch gekennzeichnet, daß die Gruppe der zweiten Schaltung zur bidirektionellen Übertragung (11) und die Einrichtungen zum Einfügen und Entnehmen (15) durchlässig sind für Befehlsinformationen (C/I), die zwischen den Endeinrichtungen (TL, TNR) ausgetauscht werden.

**5.** Anordnung nach einem der Ansprüche 1 bis 4, dadurch gekennzeichnet, daß sie Einrichtungen ($1_0$, $1_1$, 12, 13) zu ihrer austauschbaren Verbindung mit der Übertragungsleitung (LT) in einem Verteiler (RE) der Telefonzentrale (AR) aufweist, die die Leitung versorgt.

**6.** System der Korrelation der Qualitätsmessung, das die Anordnung (1) nach einem der Ansprüche 1 bis 5 enthält und in der Nähe der ersten Endeinrichtung (TL) angeordnet ist, um periodisch die Leitungsfehlerzahlen bezüglich der Daten im Leitungscode zu erlangen, die von der zweiten zur ersten Endeinrichtung übertragen werden, und das Einrichtungen (ER), die mit der ersten Endeinrichtung (TL) verbunden sind, zur Übertragung von ersten binären Daten zur zweiten Endeinrichtung (TNR) und zum Empfang von zweiten binären Daten, die von der zweiten Endeinrichtung übertragen werden und die von den ersten Daten durch Schleifenbildung (BO) in der zweiten Endeinrichtung herrühren, Einrichtungen (CTG) zum Vergleichen der ersten und zweiten Daten zur periodischen Aufstellung von binären Fehlerzahlen und Einrichtungen (17) zur Korrelation der Leitungsfehlerzahlen und der binären Fehlerzahlen aufweist.

**7.** Verfahren zur Korrelation der Qualitätsmessung der Übertragung, das im System zur Korrelation der Messung nach Anspruch 6 durchgeführt wird und umfaßt:

- das Aufstellen von Leitungsfehlerzahlen ($N_i$) während Zeitintervallen vorgegebener Größe, die auf eine Meßdauer folgen,

- das Aufstellen von binären Fehlerzahlen ($P_i$) während dieser Zeitintervalle und

- die Korrelation dieser Zahlen in Verhältnisse zwischen der binären Fehlerzahl ($P_i$) und der Leitungsfehlerzahl ($N_i$) während einem gleichen Zeitintervall, um binäre Fehlerzahlen durch Leitungsfehler zu definieren.

**8.** Verfahren nach Anspruch 7, bei dem der Mittelwert der binären Fehlerzahlen durch Leitungsfehler aufgestellt wird und von denen Mittelwerte als Funktion von Geräuschcharakteristiken aufgestellt werden, die die Übertragungsleitung stören (LT).

9. Verfahren nach Anspruch 7 oder 8, nach dem die Fehlerzahlen in Abhängigkeit von Schwellwerten ausgewählt werden, um Parameter (SAE, SGE, MD) bezüglich sowohl der Leitungsfehler als auch der binären Fehler zu definieren und diese Parameter der Leitungsfehler und der binären Fehler untereinander zu korrelieren.

**Claims**

1. A system (1) for measuring transmission quality in a two-wire digital transmission line (LT) bounded by first and second terminals (TL, TNR),

   each terminal comprising means (COD) for coding binary data into line code data transmitted over the line, means (DEC) for decoding line code data received from the line into binary data, and means (AN, SO) for suppressing an echo in the received line code data,

   the system comprising analog first and second two-way transmission circuits (10, 11) at the first and second terminals (TL, TNR) respectively and interconnected in cascade in the line to the second and first terminals respectively,

   characterised by

   means (CGA) in the first transmission circuit (10) for detecting and counting line errors in the line code data transmitted by the second terminal (TNR) over the line (LT);

   means (155, 156, 158c) for periodically introducing a read order word (CM = "11101111") into the binary data ($D_{OUT}$, IS1) transiting from the second transmission circuit (11) to the first transmission circuit (10);

   means (151 - 154) for sampling a line error count transmitted in the binary data ($D_{OUT}$, IS2) transiting from the first transmission circuit (10) to the second transmission circuit (11) by detecting and counting means in response to the read order word;

   means (16) for acquisition of line error counts sampled in a measurement period, and

   means (17) for processing the line error counts acquired in order to measure a transmission quality of the line (LT).

2. A system according to claim 1, characterised in that the binary data transiting between the first and second transmission circuits (10, 11) are structured as frames each comprising at least one terminal monitoring channel field (CM) into which a read order word is introduced periodically and from which a line error count is sampled periodically.

3. A system according to claim 2, characterised in that in addition to a line error count signal data are sampled in another channel field (C/I) of the frames independently of any read order word.

4. A system according to claim 2 or 3, characterised in that the whole of the second two-way transmission circuit (11) and of the introducing and sampling means (15) is transparent to order data (C/I) exchanged between the terminals (TL, TNR).

5. A system according to any of claims 1 to 4, characterised in that it comprises means ($1_0$, $1_1$, 12, 13) for releasably interconnecting the system to the transmission line (LT) in a local exchange (AR) distributor (RE) serving said line.

6. A quality measurement correlation system comprising the system (1) according to any of claims 1 to 5 and disposed near the first terminal (TL) for periodically acquiring line error counts relating to the line code data transmitted from the second terminal to the first terminal, means (ER) connected to the first terminal (TL) for transmitting first binary data to the second terminal (TNR) and receiving second binary data transmitted by the second terminal and issued from the first data by looping (BO) in the second terminal, means (CTG) for comparing the first and second data in order to periodically establish binary error counts, and means (17) for correlating the line error counts and the binary error counts.

**7.** A transmission quality measurement correlation process used in the measurement correlation system according to claim 6 comprising:

establishing line error counts ($N_i$) in consecutive time intervals of predetermined width in a measurement period;

establishing binary error counts ($P_i$) in said time intervals, and

correlating the counts in relationships each between the binary error count ($P_i$) and the line error count ($N_i$) during the same respective time interval in order to define binary error counts per line error.

**8.** A process according to claim 7 wherein the average of the binary error counts per line error is established and such averages are established in dependence upon noise characteristics disturbing the transmission line (LT) respectively.

**9.** A process according to claim 7 or 8 wherein the error counts are selected in dependence upon thresholds in order to define parameters (SAE, SGE, MD) relating both to the line errors and to the binary errors and to correlate the said line error parameters and binary error parameters with one another.

*FIG. 1*

(TECHNIQUE ANTERIEURE)

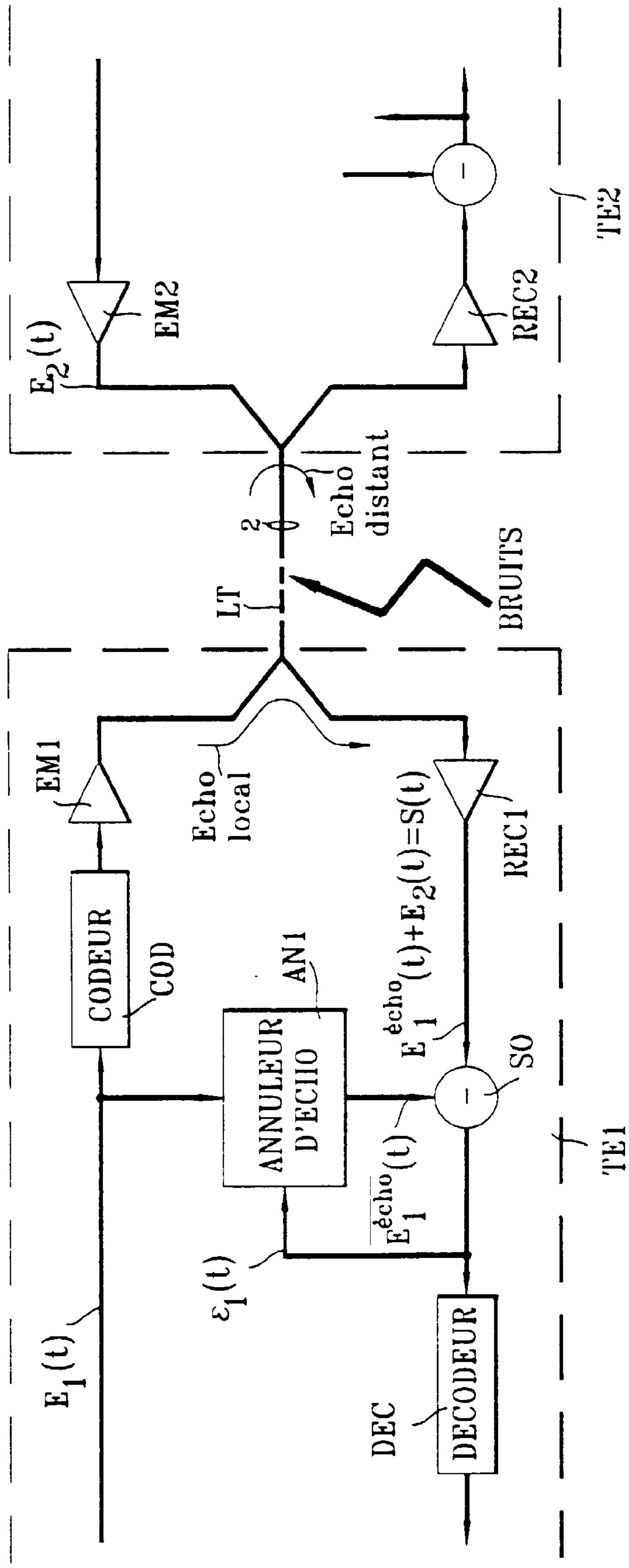

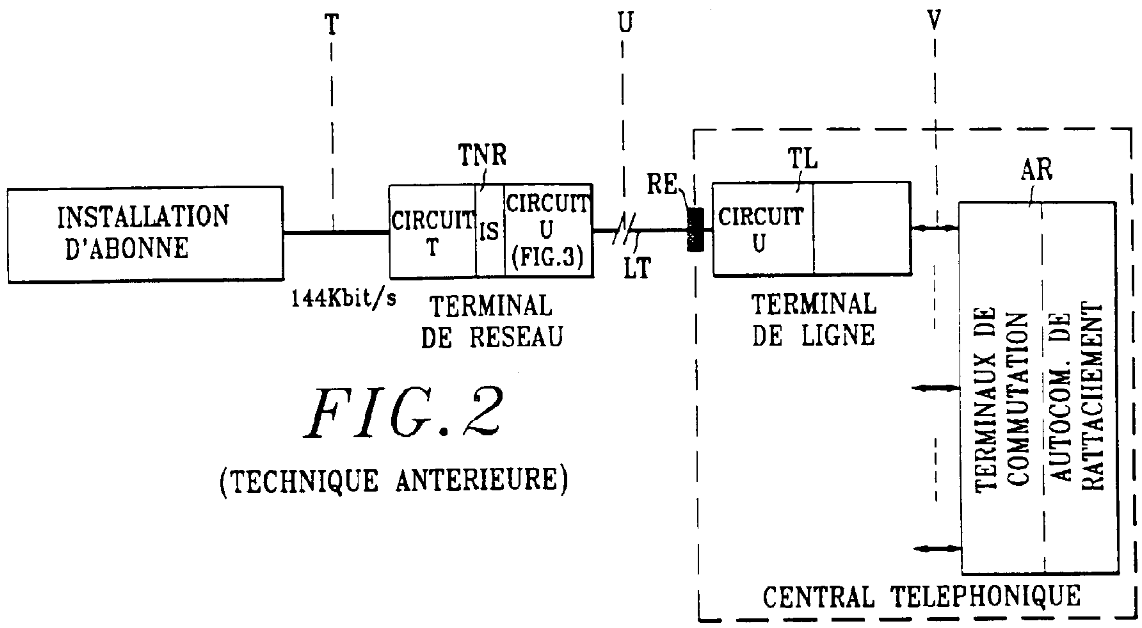


FIG. 2

(TECHNIQUE ANTERIEURE)

FIG. 3

(TECHNIQUE ANTERIEURE)

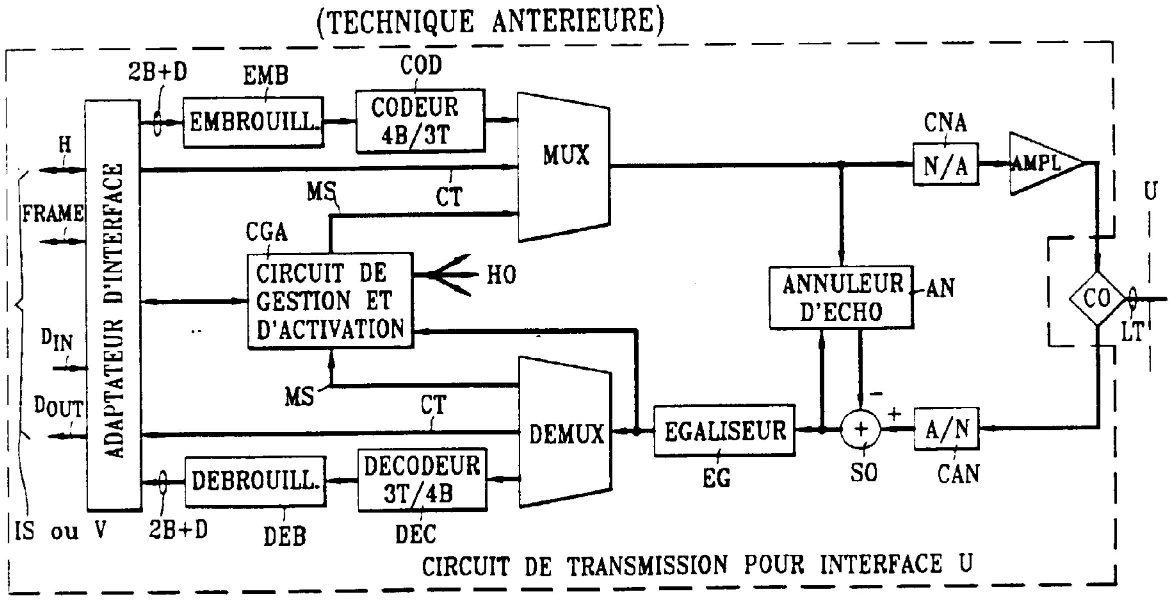


FIG. 4

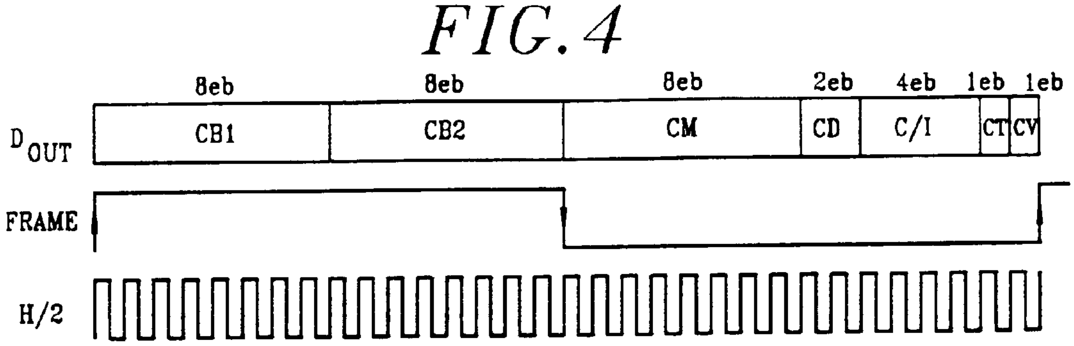

FIG.5

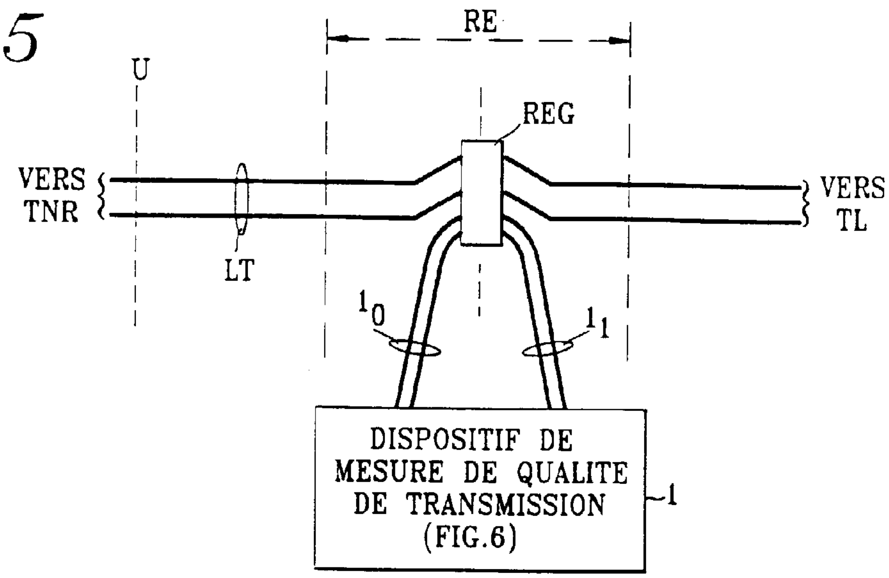
RE
U
REG
VERS TNR
VERS TL
LT
$l_0$
$l_1$
DISPOSITIF DE MESURE DE QUALITE DE TRANSMISSION (FIG.6)
1

FIG.6

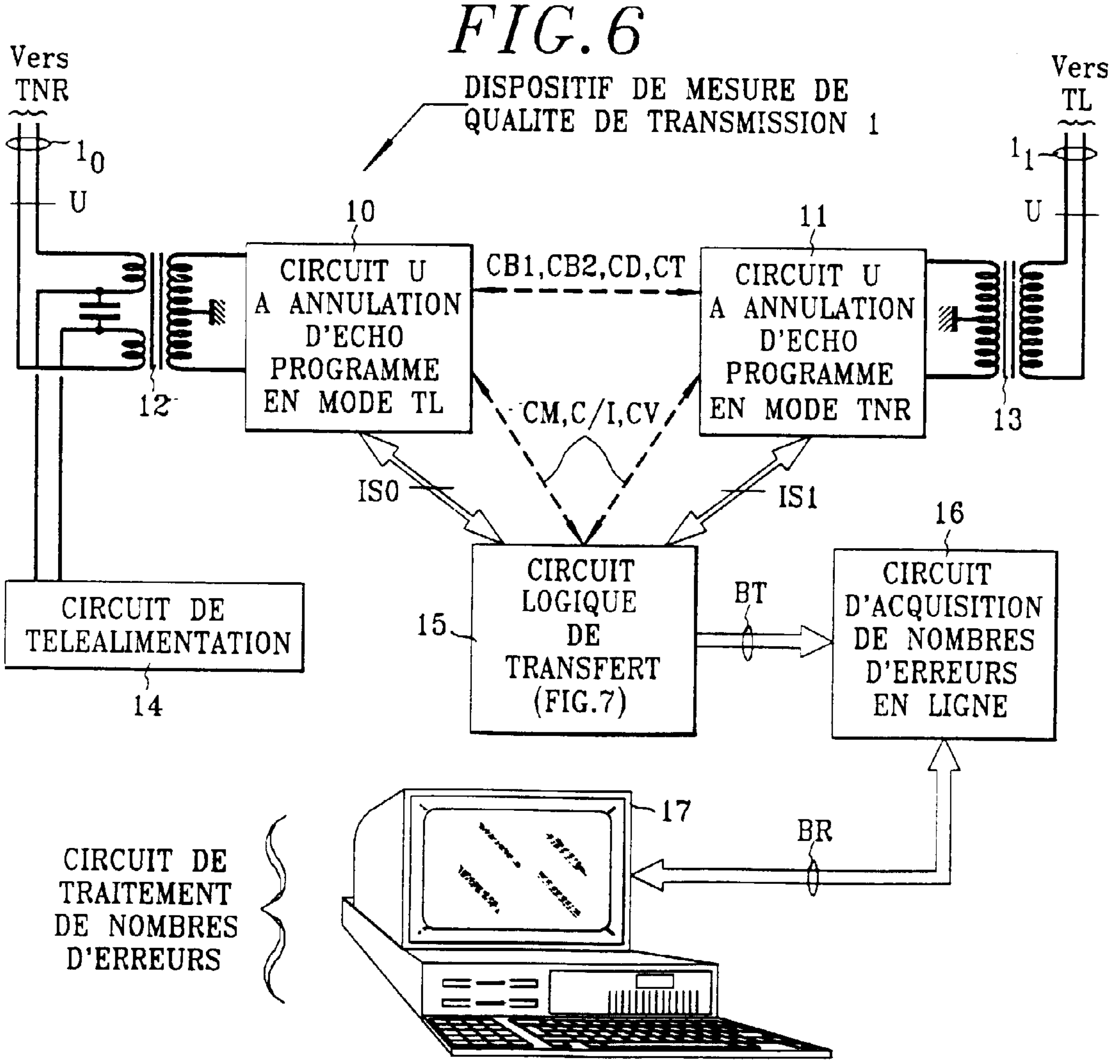
Vers TNR
$l_0$
U
DISPOSITIF DE MESURE DE QUALITE DE TRANSMISSION 1
Vers TL
$l_1$
U
10
11
CIRCUIT U A ANNULATION D'ECHO PROGRAMME EN MODE TL
CB1,CB2,CD,CT
CIRCUIT U A ANNULATION D'ECHO PROGRAMME EN MODE TNR
12
13
CM,C/I,CV
IS0
IS1
16
CIRCUIT DE TELEALIMENTATION
14
15
CIRCUIT LOGIQUE DE TRANSFERT (FIG.7)
BT
CIRCUIT D'ACQUISITION DE NOMBRES D'ERREURS EN LIGNE
17
BR
CIRCUIT DE TRAITEMENT DE NOMBRES D'ERREURS

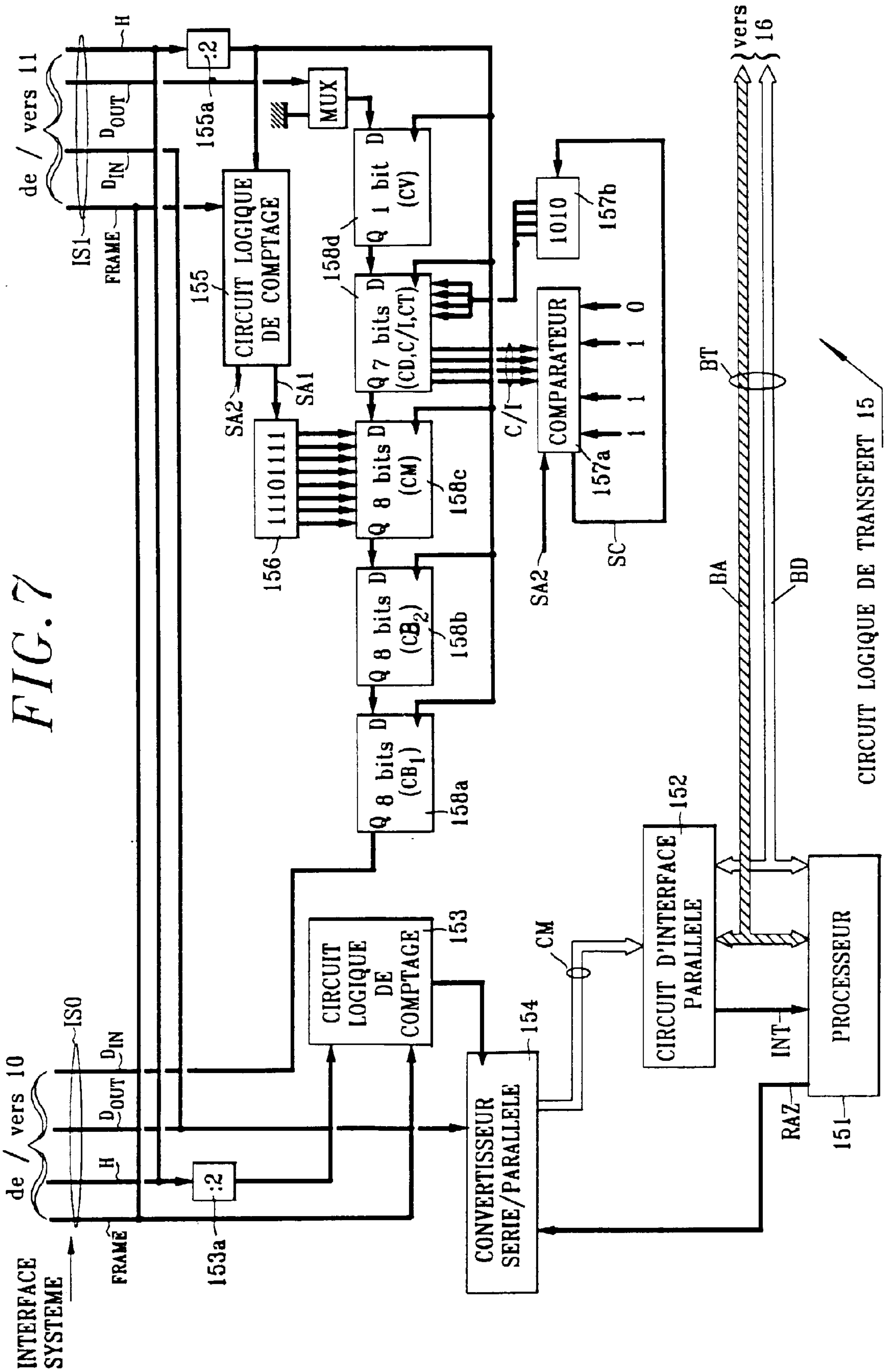
de / vers 11
IS1
FRAME
$D_{IN}$
$D_{OUT}$
H
:2
155a
MUX
CIRCUIT LOGIQUE DE COMPTAGE
155
SA2
SA1
Q 1 bit D (CV)
158d
Q 7 bits D (CD,C/I,CT)
1010
157b
11101111
156
Q 8 bits D (CM)
158c
C/I
COMPARATEUR
157a
1 1 1 0
SC
SA2
Q 8 bits D ($CB_2$)
158b
Q 8 bits D ($CB_1$)
158a
BT
BA
BD
vers 16
CIRCUIT LOGIQUE DE TRANSFERT 15
de / vers 10
IS0
$D_{IN}$
$D_{OUT}$
H
FRAME
:2
153a
INTERFACE SYSTEME
CIRCUIT LOGIQUE DE COMPTAGE
153
CONVERTISSEUR SERIE/PARALLELE
154
CM
CIRCUIT D'INTERFACE PARALLELE
152
INT
PROCESSEUR
RAZ
151

FIG. 7

FIG. 8

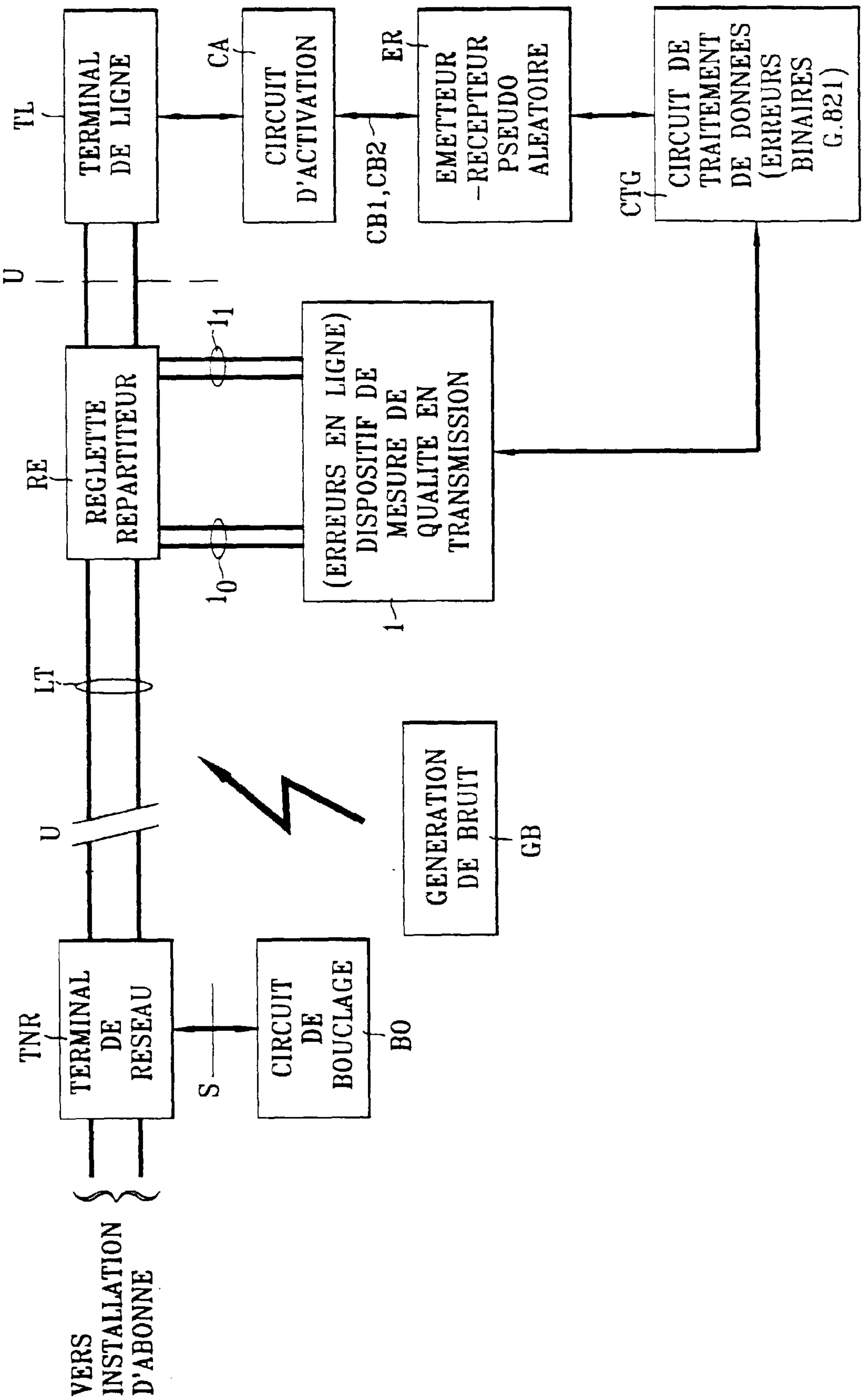

TERMINAL DE LIGNE
TL
CIRCUIT D'ACTIVATION
CA
EMETTEUR -RECEPTEUR PSEUDO ALEATOIRE
ER
CB1,CB2
CIRCUIT DE TRAITEMENT DE DONNEES (ERREURS BINAIRES G.821)
CTG
U
REGLETTE REPARTITEUR
RE
(ERREURS EN LIGNE) DISPOSITIF DE MESURE DE QUALITE EN TRANSMISSION
1
10
11
LT
U
GENERATION DE BRUIT
GB
TERMINAL DE RESEAU
TNR
S
CIRCUIT DE BOUCLAGE
BO
VERS INSTALLATION D'ABONNE

FIG.9

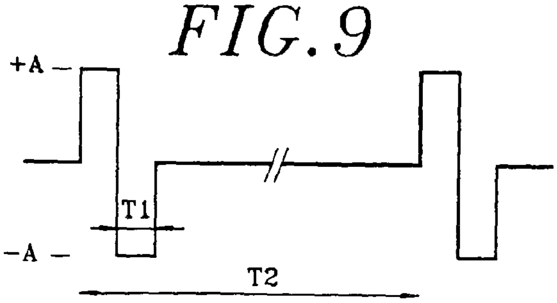


FIG.11

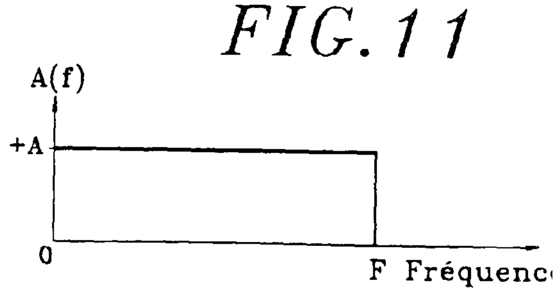


FIG.10A

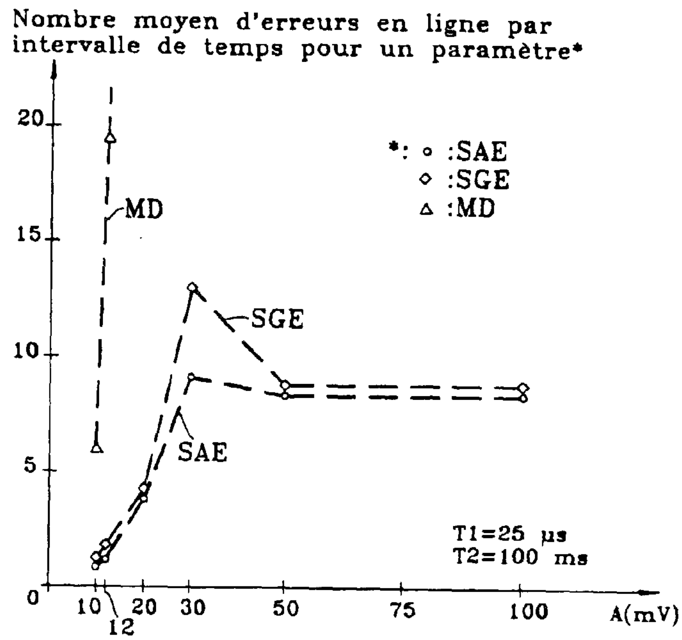


FIG.10B